# EUROPÄISCHE PATENTSCHRIFT

(11) **EP 1 573 241 B1**
(45) Veröffentlichungstag und Bekanntmachung des Hinweises auf die Patenterteilung: **07.06.2006**
(21) Anmeldenummer: 03813871.5
(22) Anmeldetag: 19.07.2003
(51) Int. Cl.: F16K 24/04, F24D 19/08

(54) **ENTLÜFTER**
AIR BLEEDING MECHANISM
DISPOSITIF DE PURGE D'AIR

(30) Priorität: 20.12.2002 DE 10261936
(43) Veröffentlichungstag der Anmeldung: 14.09.2005
(73) Patentinhaber: IMT ARMATUREN AG, 9434 Au (CH)
(72) Erfinder: HAGEN, Michael, 9436 Balgach (CH)
(74) Vertreter: Maucher, Wolfgang
(86) Internationale Anmeldenummer: PCT/EP2003/007908
(87) Internationale Veröffentlichungsnummer: WO 2004/059199

(56) Entgegenhaltungen:
- EP-A- 0 133 992
- EP-A- 0 961 061
- DE-A- 3 207 321
- DE-U- 7 738 268
- PATENT ABSTRACTS OF JAPAN vol. 018, no. 269 (M-1609), 23. Mai 1994 (1994-05-23) -& JP 06 042661 A (MAEZAWA IND INC), 18. Februar 1994 (1994-02-18)
- PATENT ABSTRACTS OF JAPAN vol. 015, no. 081 (M-1086), 25. Februar 1991 (1991-02-25) & JP 02 300577 A (KUBOTA LTD), 12. Dezember 1990 (1990-12-12)

## Beschreibung

Die Erfindung betrifft ein Heizungssystem mit einer Wärmeträger-Flüssigkeit sowie mit einem Schnellentlüfter, der ein Entlüftergehäuse aufweist, das einen Anschluß zum Verbinden mit dem Heizungssystem hat und in dem ein Schwimmer sowie ein Luftausgleichsventil vorgesehen ist, das oberhalb des Schwimmers mit diesem über einen Betätigungsmechanismus gekoppelt ist, welcher Betätigungsmechanismus einen am Schwimmer befestigten Hubhebel aufweist, der an seinem oberen Ende eine Kupplungsverbindung für einen Schwenkhebel hat, wobei zwischen dem Schwimmer und dem Luftausgleichsventil ein Schutzelement angeordnet ist.

Man kennt bereits Heizungssysteme, die einen derartigen Schnellentlüfter aufweisen, um während des Betriebs von Heizungssystemen auftretenden thermisch bedingten Änderungen des Füllvolumens die in dem Heizungssystem enthaltene Luft in die äußere Umgebung abzuführen. Auch beim Befüllen solcher Systeme dienen Schnellentlüfter zur Abgabe der Luft im Heizungssystem nach außen. Dabei öffnet ein im Schnellentlüfter angeordneter Schwimmer ein Ventil immer dann, wenn das Flüssigkeitsniveau durch die sich dort ansammelnde Luft unter ein bestimmtes Niveau gesunken ist. Dabei wird das Luftausgleichsventil im Laufe des Betriebs verunreinigt oder zerstört, wenn das Luftausgleichsventil beziehungsweise sein Betätigungsmechanismus mit der Wärmeträger-Flüssigkeit in Berührung kommt, da in der Wärmeträger-Flüssigkeit oftmals Schmutzpartikel mitgeführt werden. Bisher wurde dies dadurch vermieden, dass ein genügend großer Abstand zwischen Luftausgleichsventil und dem Niveau der Wärmeträger-Flüssigkeit vorhanden ist, der insbesondere auch vor Spritzern, zum Beispiel durch Blasenbildung in der Wärmeträger-Flüssigkeit, schützt. Ein solcher Schnellentlüfter ist beispielsweise in DE 32 07 321 C3 beschrieben. Mit einem solchen großen Abstand zwischen Luftausgleichsventil und dem Niveau der Wärmeträger-Flüssigkeit wächst jedoch auch die Baugröße des Schnellentlüfters.

Aus der EP 0 133 992 ist bereits ein Schnellentlüfter für Heizungssysteme bekannt, der an der Oberseite seines Entlüftergehäuses einen nach oben ragenden Gehäuseansatz trägt. Um das Luftausgleichsventil des vorbekannten Schnellentlüfters gegen eine Verschmutzung zu schützen, ist das Luftausgleichsventil im Gehäuseansatz lediglich hinreichend oberhalb der Flüssigkeit angeordnet. Im Bereich der auf das Luftausgleichsventil einwirkenden und im Gehäuseinneren zwischen dem Entlüftergehäuse sowie dem Gehäuseansatz angeordneten Betätigungsmittel ist ein weiteres Zusatwentil vorgesehen, das jedoch nur die Funktion eines Hilfsventils hat. Das Zusatzventil schließt beim Öffnen des Gehäuseansatzes sowie des darin befindlichen Luftausgleichsventils unter dem Einfluß einer auf das Zusatzventil einwirkenden Federbelastung den Gehäuseansatz. Das Zusatzventil soll daher nur eine leichte Reinigung oder Reparatur des Luftausgleichsventils sicherstellen und bleibt während der bestimmungsgemäßen Öffen- und Schließbewegungen des Luftausgleichsventils funktionslos. Das aus EP 0 133 992 vorbekannte Zusatzventil vermag daher das im Gehäuseansatz hinreichend oberhalb der Flüssigkeit angeordnete Luftausgleichsventil nicht gegen die im vorbekannten Schnellentlüfter vorhandene wärmeträger-Flüssigkeit abzudichten.

Aus der JP-A-06 042661 ist eine Entlüftungseinrichtung für ein Rohrleitungssystem bekannt, in welchem eine mit Schmutz- und Fremdstoffen belastete Flüssigkeit fließt. Die vorbekannte Entlüftungseinrichtung ist speziell für Abwasserleitungen sowie zur Schlammabfuhr im Bereich der Land- und Forstwirtschaft sowie der Fischerei bestimmt. Die vorbekannte Entlüftungseinrichtung weist eine zur Atmosphäre hin in Reihe geschaltete und aus mehreren Ventilen bestehende Ventilanordnung auf, die oberhalb eines sich konisch erweiternden Klärbehälters angeordnet ist. Die Ventilanordnung ist in einem Ventilgehäuse angeordnet, das vom Klärbehältnis durch zwei konische und ein Labyrinth bildende Platten abgetrennt ist-Die dem Klärbehälter zugewandten Ventile dieser Ventilanordnung stehen über ein Drahtgestänge mit einem im Klärbehälter befindlichen Schwimmkörper in Funktionsverbindung, der bei einem unteren Flüssigkeitspegel im Klärbehälter die Ventile und damit die Luftzufuhr öffnet. An dem Drahtgestänge ist ein konischer Spritzschutz gehalten, der bei einem oberen Flüssigkeitspegel den Umfangsrand der darüber liegenden konischen Platten verschließt,

Bei der aus JP-A-06 042661 vorbekannten Entlüftungseinrichtung handelt es sich jedoch nicht um einen gattungsgemäßen Schnellentlüfter, der zum Anschluß an ein Heizungssystem bestimmt ist. Ebenso wenig wird die vorbekannte Entlüftungseinrichtung von einer als Wärmeträger dienenden Flüssigkeit durchströmt. Vor allem aber soll der als Schutzelement dienende Spritzschutz der vorbekannten Entlüftungseinrichtung keines der in der Ventilanordnung vorgesehenen Entlüftungsventile gegen die in der Entlüftungseinrichtung befindliche Flüssigkeit abdichten, weil andernfalls die vergleichsweise komplexe ventilanordnung mit mehreren, in Reihe geschalteten Ventilen bei der aus JP-A-06 042661 vorbekannten Entlüftungseinrichtung völlig überflüssig wäre.

Aus der JP D2 300 577 A ist eine mit JP-A-06 042661 vergleichbare Entlüftungseinrichtung vorbekannt, bei der zwischen dem Klärbehälter und dem Entlüftungsventil ein Sieb vorgesehen ist. Das Sieb vermag zwar die zum Entlüftungsventil mit aufschwimmenden Schmutzpartikel zu reduzieren, kann jedoch keinesfalls das Entlüftungsventil vollständig gegen die in der vorbekannten Entlüftungseinrichtung vorhandene Flüssigkeit abdichten.

Es besteht daher die Aufgabe, einen Schnellentlüfter zu schaffen, der eine kleine und kompakte Bauform hat und bei dem das Luftausgleichsventil langzeitig vor Verschmutzung beziehungsweise vor Zerstörung geschützt ist.

Zur Lösung dieser Aufgabe wird erfindungsgemäß vorgeschlagen, dass am anderen Ende des Schwenkhebels eine zum Luftausgleichsventil gehörende und in Schließstellung des Luftausgleichsventils federbeaufschlagte ventilplatte angeordnet ist, die mit einem Ventilsitz des Luftausgleichsventils zusammenwirkt, dass das Schutzelement zum Abschirmen des Luftausgleichsventils zumindest gegenüber von in der Flüssigkeit enthaltenen Schmutzpartikeln in Hubrichtung des Schwimmers bewegbar ist, und dass das Schutzelement bei geschlossenem Luftausgleichsventil an einem oberen Dichtanschlag anliegt und dabei das Luftausgleichsventil gegen die in dem Schnellentlüfter vorhandene Wärmeträger-Flüssigkeit abdichtet.

Der zwischen Luftausgleichsventil und Schwimmer vorgesehene Betätigungsmechanismus ist langzeitig und ohne Wartung haltbar, weil zwischen den zusammenwirkenden Teilen nur geringe Reibungskräfte wirksam sind und der Aufbau einfach ist. Dabei wird ein einfaches Öffnen und Schließen des Luftausgleichsventils durch die Bewegung des Schwimmers begünstigt. Das bei dem vorliegenden Erfindungsgegenstand vorgesehene Schutzelement kann das Luftausgleichsventil auch in kleinen und kompakten Schnellentlüftern ohne großen Platzbedarf wirksam gegen Verschmutzung schützen. Da das Schutzelement in Hubrichtung des Schwimmers bewegbar ist und bei geschlossenem Luftausgleichsventil dieses gegen die in dem Schnellentlüfter vorhandene Wärmeträger-Flüssigkeit abdichtet, kann sich das Schutzelement mit dem sich verändernden Niveau der Wärmeträger-Flüssigkeit bewegen und beim Ansteigen der Wärmeträger-Flüssigkeit über ein bestimmtes Niveau das Luftausgleichsventil durch das Anlegen an den Dichtanschlag vor der Wärmeträger-Flüssigkeit schützen.

Damit die sich im Entlüftergehäuse ansammelnde Luft an dem Schutzelement vorbei zum Luftausgleichsventil strömen kann, ist es zweckmäßig, wenn bei geöffnetem Luftausgleichsventil sowie bei zum Dichtanschlag beabstandeten Schutzelement im Randbereich des Schutzelements oder der benachbarten inneren Wandung des Entlüftergehäuses Öffnungen zum Durchtritt von Luft vorhanden sind. Da das Niveau der Wärmeträger-Flüssigkeit bei einer zu großen Menge Luft in Entlüftergehäuse relativ niedrig ist, kann dadurch auch das Schutzelement niedriger angeordnet sein. Gleichzeitig kann die Luft an dem Schutzelement und dem Dichtanschlag vorbeiströmen.

Vorteilhaft ist es dabei, wenn als Durchströmöffnung für die Luft zwischen dem äußeren Rand des Schutzelements und der inneren wandung des Entlüftergehäuses ein vorzugsweise umlaufender Ringspalt mit einer radialen Breite von etwa einem halben Millimeter vorgesehen ist. Ein solcher Ringspalt kann einfach realisierbar sein und kann gleichzeitig die Reibung zwischen Schutzelement und innerer Wandung des Entlüftergehäuses stark senken. Dadurch ist das Schutzelement in dem Entlüftergehäuse sehr leicht bewegbar.

Eine zweckmäßige Ausführungsform des Schnellentlüfters kann darin bestehen, dass im Entlüftergehäuse im unteren, den Anschluss für die Wärmeträger-Flüssigkeit aufweisenden Teil der Schwimmer geführt ist, dass das Entlüftergehäuse oberhalb des Schwimmers einen Aufnahmebereich für das Schutzelement aufweist und dass insbesondere oberhalb des Dichtanschlags für das Schutzelement das Luftausgleichsventil und zumindest ein Teil von dessen Betätigungsmechanismus angeordnet ist. In einem so beschaffenen Schnellentlüfter kann die im Heizungssystem vorhandene Luft leicht von unten in den Schnellentlüfter eindringen und über die Oberfläche der Wärmeträger-Flüssigkeit, am Schutzelement und dem Dichtanschlag vorbei nach oben strömen und dann durch das Luftausgleichsventil entweichen.

Zweckmäßig ist es, wenn die in dem Heizungssystem und dem angeschlossenen Schnellentlüfter vorhandene Wärmeträger-Flüssigkeit Wasser ist. Wasser hat eine relativ hohe wärmekapazität und ist gleichzeitig eine oft und leicht verfügbare und preiswerte Flüssigkeit.

Eine einfach herzustellende und flexibel einsetzbare Ausführungsform des Schutzelements kann sein, wenn das Schutzelement eine flache Scheibe ist.

Für eine leichtgängige und freie Bewegung des Schwimmers im Entlüftergehäuse ist es vorteilhaft, wenn der Schwimmer eine andere Querschnittsform aufweist als das Entlüftergehäuse im Hubbereich des Schwimmers und vorzugsweise sechseckig ausgebildet ist. Dadurch kann auch die Luft leicht aus der Oberfläche der Wärmeträger-Flüssigkeit entweichen, da nicht die gesamte Flüssigkeits-Oberfläche vom Schwimmer eingenommen wird.

Damit die Schutzscheibe leicht und unmittelbar mit dem Schwimmer zusammen bewegbar ist, ist es zweckmäßig, wenn die Schutzscheibe mit dem Schwimmer vorzugsweise einstückig verbunden ist und wenn die Schutzscheibe und der Schwimmer voneinander beabstandet sind. Durch die Beabstandung des Schwimmers und der Schutzscheibe kann damit auch ein Abstand zwischen Schutzscheibe und Flüssigkeits-Oberfläche geschaffen werden, der eventuelle Spritzer von der Schutzscheibe fernhalten kann und damit den Schutz der dahinterliegenden zu schützenden Teile noch weiter vergrößern kann.

Für eine kostengünstige Herstellung und gleichzeitig eine langzeitige Haltbarkeit des Schwimmers mit der damit verbundenen Schutzscheibe ist es vorteilhaft, wenn die Schutzscheibe und der Schwimmer aus Kunststoff, vorzugsweise aus Polypropylen (PP) und/oder Polyphenylsulfid (PPS), besteht.

Für ein leichtes Entweichen der Luft aus der Wärmeträger-Flüssigkeit ist es zweckmäßig, wenn die Längsachse des Schnellentlüfters in Montagestellung etwa vertikal verläuft, wenn der Schwimmer im Inneren des Schnellentlüfters etwa vertikal geführt ist, wenn der Anschluss für das Heizungssystem am unteren Ende des Schnellentlüfters ist und wenn das Luftausgleichsventil am oberen Ende des Schnellentlüfters angeordnet ist. So kann die Luft leicht von unten nach oben durch das Entlüftergehäuse steigen und durch das Luftausgleichsventil entweichen.

Um den Schnellentlüfter in seiner Bauform noch kleiner und kompakter gestalten zu können, ist es sehr vorteilhaft, wenn das Luftausgleichsventil quer zur Längsachse des Schnellentlüfters angeordnet ist. Die Luft kann aus einem so angeordneten Luftausgleichsventil gut entweichen, wobei jedoch die Gesamtlänge des Schnellentlüfters sinkt und damit die Einsetzbarkeit vor allem an engen Stellen von Heizungssystemen steigt. Vor allem beim Einbau des Schnellentlüfters in der Nähe des Heizkessels zum Entlüften des Heizungssystems an dieser Stelle, wo durch besonders große Temperaturunterschiede in der Wärmeträger-Flüssigkeit viel Luft frei wird und entweichen muss, kann eine kompakte Bauform für den Einbau sehr wichtig sein.

Nachstehend sind Ausführungsbeispiele der Erfindung anhand der Zeichnung näher beschrieben. Es zeigt in zum Teil schematisierter Darstellung:
- Fig. 1: einen Längsschnitt durch einen erfindungsgemäßen Schnellentlüfter mit einem geöffneten Luftausgleichsventil,
- Fig. 2: einen Längsschnitt entsprechend Fig.1 mit geschlossenem Luftausgleichsventil des Schnellentlüfters, wobei ein Schutzelement das Luftausgleichsventil durch Beaufschlagung eines Dichtanschlags zusätzlich schützt,
- Fig. 3: eine Seitenansicht des erfindungsgemäßen Schnellentlüfters sowie
- Fig. 4: eine Ansicht von oben des erfindungsgemäßen Schnellentlüfters.

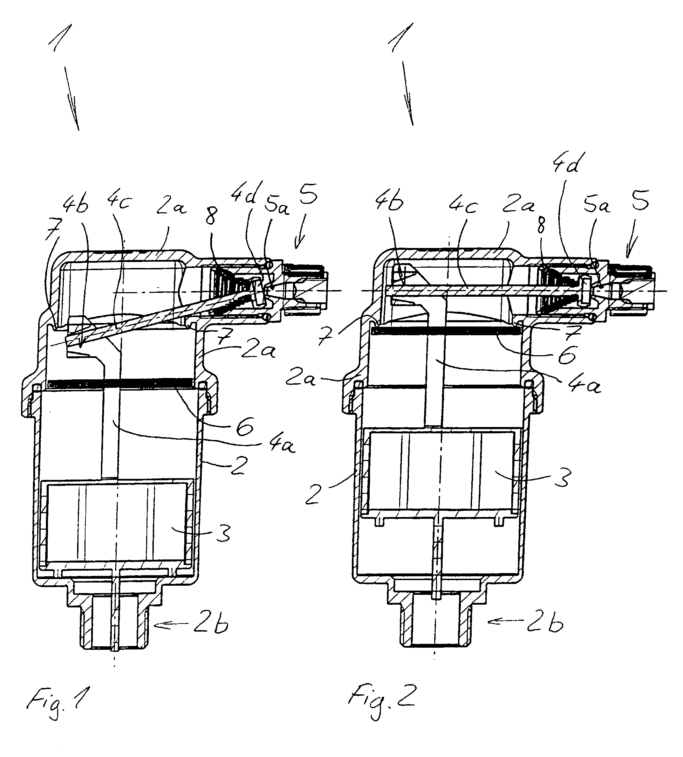

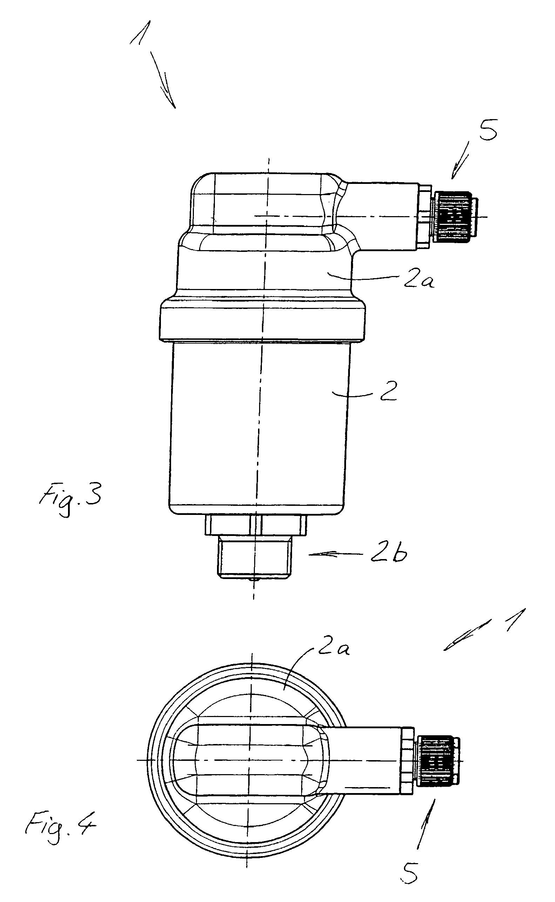

Ein im Ganzen mit 1 bezeichneter und besonders gut im Schnitt in den Fig.1 und 2 erkennbarer Schnellentlüfter für Heizungssysteme mit einer Wärmeträger-Flüssigkeit weist ein Entlüftergehäuse 2 mit einem Anschluss 2b zum Verbinden mit dem Heizungssystem auf. In dem Entlüftergehäuse 2 ist ein Schwimmer 3 sowie ein oberhalb des Schwimmers 3 über einen Betätigungsmechanismus 4 mit dem Schwimmer 3 gekoppeltes Luftausgleichsventil 5 angeordnet. Zwischen Schwimmer 3 und dem Luftausgleichsventil 5 ist ein Schutzelement 6 zum Abschirmen des Luftausgleichsventils 5 gegen von in der Flüssigkeit enthaltenen Schmutzpartikeln angeordnet.

Die beiden in den Fig.1 und 2 gezeigten unterschiedlichen Betriebszustände des Schnellentlüfters 1 zeigen im Vergleich, dass das Schutzelement 6 in Hubrichtung des Schwimmers 3 bewegbar ist. Ist das Luftausgleichsventil 5 geschlossen, wie in Fig.2 dargestellt, liegt das Schutzelement 6 an einem oberen Dichtanschlag 7 an und dichtet das Luftausgleichsventil 5 sowie dessen Betätigungsmechanismus 4 gegen die im Schnellentlüfter 1 vorhandene Wärmeträger-Flüssigkeit, die im allgemeinen Wasser ist, ab.

Bei geöffnetem Luftausgleichsventil 5, wie in Fig.1 dargestellt, ist das Schutzelement 6 zum Dichtanschlag 7 beabstandet. Dabei kann neben dem Schutzelement 6 beziehungsweise in seinem Randbereich Luft an dem Schutzelement 6 vorbeiströmen. Dazu weist das Schutzelement 6 als Durchströmöffnung zwischen seinem äußeren Rand und der benachbarten inneren Wandung des Entlüftergehäuses 2 einen umlaufenden Ringspalt auf, der eine radiale Breite von etwa einem halben Millimeter hat.

In dem in den Fig.1 und 2 im Schnitt gezeigten Ausführungsbeispiel ist der Schwimmer 3 im unteren Teil des Entlüftergehäuses 2 geführt, welches auch einen Anschluss 2b für die Wärmeträger-Flüssigkeit aufweist. Der Schwimmer 3 weist dabei eine andere Querschnittsform, beispielsweise eine sechseckige Form, als das Entlüftergehäuse 2 im Hubbereich des Schwimmers 3 auf. Oberhalb des Schwimmers 3 weist das Entlüftergehäuse 2 einen Aufnahmebereich für das Schutzelement 6 auf. Der Betätigungsmechanismus 4 des Luftausgleichsventils 5 ist teilweise oberhalb und teilweise unterhalb des als flache Scheibe ausgebildeten Schutzelementes 6 angeordnet.

Dabei weist der Betätigungsmechanismus 4 einen Hubhebel 4a auf, der am Schwimmer 3 befestigt ist und auf dessen axialer Erstreckung das Schutzelement 6 angeordnet ist. Dabei ist das Schutzelement 6 vom Schwimmer 3 axial beabstandet und das Schutzelement 6 ist mit dem Hubhebel 4a und dieser wiederum mit dem Schwimmer 3 einstückig verbunden. Am oberen Ende des Hubhebels 4a weist dieser eine als Aufnahme für einen darin eingreifenden Schwenkhebel 4c ausgebildete Kupplungsverbindung 4b auf, an dessen anderen Ende eine zum Luftausgleichsventil 5 gehörende Ventilplatte 4d angeordnet ist. Diese Ventilplatte 4d wirkt mit einer in das Entlüftergehäuse 2 weisenden, inneren Ventilöffnung beziehungsweise dem Ventilsitz 5a des Luftausgleichsventils 5 zusammen. Dabei ist die Ventilplatte 4d an ihrer Unterseite in Schließrichtung des Luftausgleichsventils 5 durch eine Druckfeder 8 federbeaufschlagt.

Fig.3 zeigt den Schnellentlüfter 1 in seiner Montagestellung, in der die Längsachse des Schnellentlüfters 1 vertikal verläuft. Dadurch wird auch der Schwimmer 3, wie in Fig.1 und 2 deutlich wird, vertikal geführt. Der Anschluss 2b für die Wärmeträger-Flüssigkeit beziehungsweise für das Heizungssystem ist am unteren Ende des Schnellentlüfters 1 und das Luftausgleichsventil am oberen Ende des Schnellentlüfters 1 angeordnet. Dabei ist das Luftausgleichsventil 5 seitlich am Entlüftergehäuse 2 und quer zur Längsachse des Schnellentlüfters 1 angebracht.

## Patentansprüche

1. Heizungssystem mit einer wärmeträger-Flüssigkeit sowie mit einem Schnellentlüfter (1), der ein Entlüftergehäuse (2) aufweist, das (2) einen Anschluß (2b) zum Verbinden mit dem Heizungssystem hat und in dem (2) ein Schwimmer (3) sowie ein Luftausgleichsventil (5) vorgesehen ist, das (5) oberhalb des Schwimmers (3) mit diesem über einen Betätigungsmechanismus (4) gekoppelt ist, welcher Betätigungsmechanismus (4) einen am Schwimmer (3) befestigten Hubhebel (4a) aufweist, der an seinem oberen Ende eine Kupplungsverbindung (4b) für einen Schwenkhebel (4c) hat, wobei zwischen dem Schwimmer (3) und dem Luftausgleichsventil (5) ein Schutzelement (6) angeordnet ist, **dadurch gekennzeichnet, dass** am anderen Ende des Schwenkhebels (4c) eine zum Luftausgleichsventil (5) gehörende und in Schließstellung des Luftausgleichsventils (5) federbeaufschlagte Ventilplatte (4d) angeordnet ist, die mit einem Ventilsitz (5a) des Luftausgleichsventils (5) zusammenwirkt, dass das Schutzelement (6) zum Abschirmen des Luftausgleichsventils (5) zumindest gegenüber von in der Flüssigkeit enthaltenen Schmutzpartikeln in Hubrichtung des Schwimmers (3) bewegbar ist, und dass das Schutzelement (6) bei geschlossenem Luftausgleichsventil (5) an einem oberen Dichtanschlag (7) anliegt und dabei das Luftausgleichsventil (5) gegen die in dem Schnellentlüfter (1) vorhandene Wärmeträger-Flüssigkeit abdichtet.

2. Heizungssystem nach Anspruch 1, **dadurch gekennzeichnet, dass** bei geöffnetem Luftausgleichsventil (5) sowie bei zum Dichtanschlag (7) beabstandeten Schutzelement (6) im Randbereich des Schutzelements (6) oder der benachbarten inneren Wandung des Entlüftergehäuses (2) Öffnungen zum Durchtritt von Luft vorhanden sind.

3. Heizungssystem nach einem der Ansprüche 1 oder 2, **dadurch gekennzeichnet, dass** als Durchströmöffnung für die Luft zwischen dem äußeren Rand des Schutzelements (6) und der inneren Wandung des Entlüftergehäuses (2) ein vorzugsweise umlaufender Ringspalt mit einer radialen Breite von etwa einem halben Millimeter vorgesehen ist.

4. Heizungssystem nach einem der Ansprüche 1 bis 3, **dadurch gekennzeichnet, dass** im Entlüftergehäuse (2) im unteren, den Anschluss (2b) für die Wärmeträger-Flüssigkeit aufweisenden Teil der Schwimmer (3) geführt ist, dass das Entlüftergehäuse (2) oberhalb des Schwimmers (3) einen Aufnahmebereich für das Schutzelement (6) aufweist und dass insbesondere oberhalb des Dichtanschlags (7) für das Schutzelement (6) das Luftausgleichsventil (5) und zumindest ein Teil von dessen Betätigungsmechanismus (4) angeordnet ist.

5. Heizungssystem nach einem der Ansprüche 1 bis 4, **dadurch gekennzeichnet, dass** die in dem Heizungssystem und dem angeschlossenen Schnellentlüfter (1) vorhandene Wärmeträger-Flüssigkeit Wasser ist.

6. Heizungssystem nach einem der Ansprüche 1 bis 5, **dadurch gekennzeichnet, dass** das Schutzelement (6) eine flache Scheibe ist.

7. Heizungssystem nach einem der Ansprüche 1 bis 6, **dadurch gekennzeichnet, dass** der Schwimmer (3) eine andere Querschnittsform aufweist als das Entlüftergehäuse (2) im Hubbereich des Schwimmers (3) und vorzugsweise sechseckig ausgebildet ist.

8. Heizungssystem nach einem der Ansprüche 1 bis 7, **dadurch gekennzeichnet, dass** die Schutzscheibe (6) mit dem Schwimmer (3) vorzugsweise einstückig verbunden ist und dass die Schutzscheibe (6) und der Schwimmer (3) voneinander beabstandet sind.

9. Heizungssystem nach einem der Ansprüche 1 bis 8, **dadurch gekennzeichnet, dass** die Schutzscheibe (6) und der Schwimmer (3) aus Kunststoff, vorzugsweise aus Polypropylen (PP) und/oder Polyphenylsulfid (PPS), besteht.

10. Heizungssystem nach einem der Ansprüche 1 bis 9, **dadurch gekennzeichnet, dass** die Längsachse des Schnellentlüfters (1) in Montagestellung etwa vertikal verläuft, dass der Schwimmer (3) im Inneren des Schnellentlüfters (1) etwa vertikal geführt ist, dass der Anschluss (2b) für das Heizungssystem am unteren Ende des Schnellentlüfters (1) ist und dass das Luftausgleichsventil (5) am oberen Ende des Schnellentlüfters (1) angeordnet ist.

11. Heizungssystem nach einem der Ansprüche 1 bis 10, **dadurch gekennzeichnet, dass** das Luftausgleichsventil (5) quer zur Längsachse des Schnellentlüfters (1) angeordnet ist.

## Claims

1. Heating system having a heat carrying liquid and a fast-acting vent (1) which comprises a vent housing (2) which (2) has a connection (2b) for connecting to the heating system and in which (2) are provided a float (3) and an air equalisation valve (5) which (5) is coupled thereto above the float (3) via an actuating mechanism (4), said actuating mechanism (4) comprising a lifting lever (4a) attached to the float (3), said lever (4a) having at its upper end a coupling connection (4b) for a pivot lever (4c), while a protective element (6) is provided between the float (3) and the air equalisation valve (5), **characterised in that** at the other end of the pivot lever (4c) is disposed a valve plate (4d) belonging to the air equalisation valve (5) and spring-biased into the closed position of the air equalisation valve (5), said valve plate (4d) cooperating with a valve seat (5a) of the air equalisation valve (5), **in that** the protective element (6) is movable in the direction of lifting of the float (3) in order to shield the air equalisation valve (5) at least from any dirt particles contained in the liquid, and **in that** the protective element (6) abuts on an upper sealing abutment (7) when the air equalisation valve (5) is closed and the air equalisation valve (5) forms a seal against the heat carrying liquid contained in the fast-acting vent (1).

2. Heating system according to claim 1, **characterised in that** when the air equalisation valve (5) is open and the protective element (6) is at a spacing from the sealing abutment (7), there are openings in the edge region of the protective element (6) or the adjacent inner wall of the vent housing (2), for air to pass through,

3. Heating system according to one of claims 1 or 2, **characterised in that** a preferably encircling annular slot with a radial width of about half a millimetre is provided as a flow aperture for the air between the outer edge of the protective element (6) and the inner wall of the vent housing (2).

4. Heating system according to one of claims 1 to 3, **characterised in that** the float (3) is guided in the vent housing (2) in the lower part comprising the connection (2b) for the heat carrying liquid, **in that** the vent housing (2) comprises, above the float (3), a receiving area for the protective element (6), and **in that**, in particular, the air equalisation valve (5) and at least part of its actuating mechanism (4) is disposed above the sealing abutment for the protective element (6).

5. Heating system according to one of claims 1 to 4, **characterised in that** the heat carrying liquid present in the heating system and the attached fast-acting vent (1) is water.

6. Heating system according to one of claims 1 to 5, **characterised in that** the protective element (6) is a flat disc.

7. Heating system according to one of claims 1 to 6, **characterised in that** the float (3) has a different cross-sectional shape from the vent housing (2) in the lifting region of the float (3) and is preferably hexagonal.

8. Heating system according to one of claims 1 to 7, **characterised in that** the protective disc (6) is preferably integrally connected to the float (3), and the protective disc (6) and the float (3) are spaced from each other.

9. Heating system according to one of claims 1 to 8, **characterised in that** the protective disc (6) and the float (3) are made of plastics, preferably polypropylene (PP) and/or polyphenylsulphide (PPS).

10. Heating system according to one of claims 1 to 9, **characterised in that** the longitudinal axis of the fast-acting vent (1) extends substantially vertically in the assembly position, **in that** the float (3) is guided substantially vertically inside the fast-acting vent (1), **in that** the connection (2b) for the heating system is at the bottom end of the fast-acting vent (1) and **in that** the air equalisation valve (5) is located at the top end of the fast-acting vent (1).

11. Heating system according to one of claims 1 to 10, **characterised in that** the air equalisation valve (5) is arranged transversely of the longitudinal axis of the fast-acting vent (1).

## Revendications

1. Système de chauffage du type à fluide calo-porteur ainsi qu'à dispositif de purge rapide d'air (1), comportant un boîtier de dispositif de purge d'air (2), lequel boîtier de dispositif de purge d'air (2) présentant un connecteur (2b) en vue de sa réunion avec le système de chauffage, dans le boîtier de dispositif de purge d'air (2) étant prévu un flotteur (3), ainsi qu'une soupape d'égalisation d'air (5), laquelle soupape d'égalisation d'air (5) étant, en amont du flotteur (3), couplée avec celui-ci par l'intermédiaire d'un mécanisme d'actionnement (4), lequel mécanisme d'actionnement (4) présentant un levier de soulèvement (4a) fixé au flotteur (3), et présentant, à son extrémité supérieure, une liaison par accouplement (4b) pour un levier basculant (4c), entre le flotteur (3) et la soupape d'égalisation d'air étant placé un élément de protection (6), **caractérisé en ce qu'**à l'autre extrémité du levier basculant (4c) est disposé un clapet (4d) faisant partie de la soupape d'égalisation d'air (5), soumis à un ressort en position de fermeture de la soupape d'égalisation d'air (5) et qui coopère avec un siège de soupape (5a) de la soupape d'égalisation d'air (5), **en ce que** l'élément de protection (6) peut se déplacer dans la direction de soulèvement du flotteur (3), en vue de protéger la soupape d'égalisation d'air (5), au moins vis-à-vis des particules de pollution contenues dans le fluide, et **en ce que** l'élément de protection (6), en position de fermeture de la soupape d'égalisation d'air (5), repose sur une butée d'étanchéisation supérieure (7), et, par là, rend étanche la soupape d'égalisation d'air (5) vis-à-vis du fluide calo-porteur présent dans le dispositif de purge rapide d'air (1).

2. Système de chauffage selon la revendication 1, **caractérisé en ce que**, en position d'ouverture de la soupape d'égalisation d'air (5), ainsi que dans l'élément de protection (6) éloigné de la butée d'étanchéité (7) dans la région marginale de l'élément de protection, ou de la paroi intérieure voisine du boîtier du dispositif de purge (2), sont prévues des ouvertures pour le passage de l'air.

3. Système de chauffage selon l'une ou l'autre des revendications 1 ou 2, **caractérisé en ce qu'**une fente annulaire, de préférence périphérique, dont la largeur radiale est d'environ un demi millimètre, est prévue en tant que passage pour l'air entre le bord extérieur de l'élément de protection (6) et la paroi intérieure du boîtier du dispositif de purge d'air (2).

4. Système de chauffage selon l'une quelconque des revendications 1 à 3, **caractérisé en ce que** le flotteur (3) est guidé dans la portion inférieure du dispositif de purge rapide d'air présentant le connecteur (2b) pour le fluide calo-porteur, **en ce que** le boîtier de dispositif de purge d'air (2) présente, en amont du flotteur (3), une région de réception pour l'élément de protection (6), et **en ce que**, en particulier en amont de la butée d'étanchéisation (7) pour l'élément de protection (6), est disposée la soupape d'égalisation d'air (5) et au moins une partie du mécanisme d'actionnement de celle-ci.

5. Système de chauffage selon l'une quelconque des revendications 1 à 4, **caractérisé en ce que** le fluide calo-porteur utilisé dans le système de chauffage et le dispositif de purge rapide d'air qui lui est associé est de l'eau.

6. Système de chauffage selon l'une quelconque des revendications 1 à 5, **caractérisé en ce que** l'élément de protection (6) est un disque plat.

7. Système de chauffage selon l'une quelconque des revendications 1 à 6, **caractérisé en ce que** le flotteur (3) présente, en section transversale, une forme autre que celle du boîtier de dispositif de purge d'air dans la région de soulèvement du flotteur (3), et est de préférence de forme hexagonale.

8. Système de chauffage selon l'une quelconque des revendications 1 à 7, **caractérisé en ce que** le disque de protection (6) est, de préférence, réuni en une seule pièce avec le flotteur (3), et **en ce que** le disque de protection (6) et le flotteur (3) sont espacés l'un de l'autre.

9. Système de chauffage selon l'une quelconque des revendications 1 à 8, **caractérisé en ce que** le disque de protection (6) et le flotteur (3) sont réalisés en matière plastique, de préférence en polypropylène (PP) et/ou en polysulfure de phényle (PPS).

10. Système de chauffage selon l'une quelconque des revendications 1 à 9, **caractérisé en ce que**, en position montée, l'axe longitudinal du dispositif de purge rapide d'air (1) est à peu près vertical, **en ce que** le flotteur (3) est guidé à peu près verticalement à l'intérieur du dispositif de purge rapide d'air (1), **en ce que** le connecteur (2b) au système de chauffage est situé à l'extrémité inférieure du dispositif de purge rapide d'air (1), et **en ce que** la soupape d'égalisation d'air (5) est placée à l'extrémité supérieure du dispositif de purge rapide d'air (1).

11. Système de chauffage selon l'une quelconque des revendications 1 à 10, **caractérisé en ce que** la soupape d'égalisation d'air (5) est disposée obliquement par rapport à l'axe longitudinal du dispositif de purge rapide d'air (1).
